# FASCICULE DE BREVET EUROPEEN

(11) **EP 3 551 319 B1**
(45) Date de publication et mention de la délivrance du brevet: **19.04.2023**
(21) Numéro de dépôt: 17792056.8
(22) Date de dépôt: 31.10.2017
(51) Int. Cl.: B01D 53/90, B01D 53/92, B01D 53/94, F01N 3/20, F01N 3/029

(54) **FLUIDE DE DEPOLLUTION DE GAZ D'ECHAPPEMENT COMPORTANT UN CARBONATE METALLIQUE BASIQUE SOLUBLE, SON PROCEDE DE PREPARATION ET SON UTILISATION POUR LES MOTEURS A COMBUSTION INTERNE**
ABGASVERSCHMUTZUNGSKONTROLLFLUID MIT EINEM LÖSLICHEN BASISCHEN METALLCARBONAT, VERFAHREN ZUR HERSTELLUNG DAVON UND VERWENDUNG FÜR VERBRENNUNGSMOTOREN
EXHAUST GAS POLLUTION CONTROL FLUID COMPRISING A SOLUBLE BASIC METAL CARBONATE, PROCESS FOR PREPARING SAME AND USE THEREOF FOR INTERNAL COMBUSTION ENGINES

(30) Priorité: 07.12.2016 FR 1662057
(43) Date de publication de la demande: 16.10.2019
(73) Titulaire: IFP Energies nouvelles, 92852 Rueil-Malmaison (FR)
(72) Inventeur: GONZALEZ, Serge, 69330 Jonage (FR); PASQUIER, David, 69006 Lyon (FR); VALLET, Jacques, 69008 Lyon (FR)
(74) Mandataire: IFP Energies nouvelles
(86) Numéro de dépôt international: PCT/EP2017/077851
(87) Numéro de publication internationale: WO 2018/103955

(56) Documents cités:
- US-A- 3 449 063
- US-A- 6 051 040
- US-A1- 2011 239 626
- BALITSKY V S ET AL: "Physico-chemical foundations of malachite synthesis and structural-morphological peculiarities and properties of its man-made jewelry quality varieties", PROGRESS IN CRYSTAL GROWTH AND CHARACTERIZATION OF MATERIALS, ELSEVIER PUBLISHING, BARKING, GB, vol. 21, no. 1-4, 1 janvier 1991 (1991-01-01), pages 139-161, XP025748642, ISSN: 0960-8974, DOI: 10.1016/0960-8974(91)90011-Z [extrait le 1991-01-01]
- SMITH J W H ET AL: "The investigation of copper-based impregnated activated carbons prepared from water-soluble materials for broad spectrum respirator applications", JOURNAL OF HAZARDOUS MATERIALS, ELSEVIER, AMSTERDAM, NL, vol. 180, no. 1-3, 15 août 2010 (2010-08-15), pages 419-428, XP027064134, ISSN: 0304-3894, DOI: 10.1016/J.JHAZMAT.2010.04.047 [extrait le 2010-05-28]
- ZHAI Y C ET AL: "A green process for recovering nickel from nickeliferous laterite ores", TRANSACTIONS OF NONFERROUS METALS SOCIETY OF CHINA : ENGLISH EDITION = ZHONGGUO-YOUSE-JINSHU-XUEBAO, ELSEVIER, AMSTERDAM, NL, vol. 20, 1 mai 2010 (2010-05-01), pages s65-s70, XP027075843, ISSN: 1003-6326, DOI: 10.1016/S1003-6326(10)60014-3 [extrait le 2010-05-01]

## Description

### Domaine de l'invention

La présente invention concerne le domaine de la dépollution des gaz d'échappement, notamment de moteurs à combustion interne, et en particulier pour véhicule automobile.

Plus précisément la présente invention concerne un fluide unique pour la dépollution automobile, permettant d'effectuer deux opérations distinctes : la réduction catalytique sélective des oxydes d'azote, désignés sous le terme générique NOx, en utilisant la technologie de Réduction Catalytique Sélective (RCS), couramment désignée par son nom anglais Sélective Catalytic Réduction (SCR), ainsi que l'aide à la régénération du filtre à particules (FAP). L'aide à la régénération peut se manifester soit par la promotion de la régénération en continue du filtre à particules, soit par l'accélération de la combustion des particules lors des phases de régénération actives du FAP, soit par une combinaison de ces deux avantages.

Le fluide selon l'invention est homogène et présente des caractéristiques de stabilité dans le temps, ou lors de variations de la température ou de pH.

La présente invention décrit également le procédé de préparation du fluide ainsi que son utilisation.

### Contexte général

Comme cela est connu, les gaz d'échappement des moteurs à combustion interne de type Diesel contiennent de nombreux polluants, tels que des polluants sous forme gazeuse comme les hydrocarbures imbrûlés (HC), le monoxyde de carbone (CO), les oxydes d'azote NOx (par exemple NO et NO₂), en plus des particules. Les particules sont quant à elles majoritairement des particules de suie (composés carbonés). Elles peuvent aussi comprendre des composés inorganiques issus de l'usure des moteurs ou contenus dans les lubrifiants et leurs additifs ou dans les carburants. La suie et ces composés inorganiques forment des cendres qui demeurent dans le filtre et s'accumulent durant la vie du moteur.

Il est communément admis que les NOx sont le résultat de la combustion qui se déroule à des températures élevées et en présence d'oxygène. Ces conditions sont généralement rencontrées lors de tous types de combustions, particulièrement celles ayant lieu en mélange pauvre, comme celles avec injection directe en mélange pauvre, quel que soit le carburant utilisé. Or, les NOx présentent un inconvénient majeur car ils ont un impact néfaste directement sur la santé de l'être humain, particulièrement le NO₂, et indirectement par la formation secondaire d'ozone troposphérique.

Afin de respecter les normes d'émissions de polluants et de préserver l'environnement et la santé humaine, il est devenu nécessaire de traiter ces polluants avant de rejeter les gaz d'échappement dans l'atmosphère.

Comme cela est connu, le respect de ces normes est généralement réalisé grâce à un traitement en dépollution des gaz d'échappement circulant dans la ligne d'échappement du moteur.

Ainsi, pour traiter les hydrocarbures imbrûlés et le monoxyde de carbone pour des moteurs fonctionnant en mélange pauvre, des moyens de catalyse, tels qu'un catalyseur d'oxydation, sont placés sur la ligne d'échappement.

En ce qui concerne les gaz d'échappement, notamment des moteurs Diesel, un filtre à particules FAP est avantageusement placé sur cette ligne de manière à capter puis à éliminer les particules présentes dans les gaz d'échappement et éviter ainsi qu'elles soient rejetées dans l'atmosphère.

Ce filtre, qui peut être également un filtre catalysé (FRCS) afin de réaliser une réduction catalytique sélective des NOx comme décrite plus bas, doit être régénéré périodiquement afin qu'il conserve toutes ses capacités de filtration en réalisant une combustion des particules retenues dans ce filtre. Ces opérations de régénération consistent principalement en une augmentation de la température du filtre, qui peuvent soit se produire spontanément lors d'une utilisation du moteur à forte charge, soit être générées au moyen d'une oxydation exothermique, sur un catalyseur placé en amont du filtre, d'espèces chimiques réductrices issues de la combustion ou d'une injection directement à l'échappement déclenchées par le contrôle moteur.

En ce qui concerne les NOx, les gaz d'échappement traversent également d'autres moyens de catalyse, notamment des catalyseurs du type catalyseur RCS. Ce catalyseur RCS permet de réduire sélectivement les NOx en azote grâce à l'action d'un agent réducteur. Cet agent réducteur, qui est généralement injecté en amont du catalyseur RCS, peut être de l'ammoniac ou un composé générant de l'ammoniac par décomposition, comme de l'urée, ou être un hydrocarbure provenant d'une substance hydrocarbonée oxygénée ou non. Actuellement, la technique la plus répandue pour la dépollution des NOx est la catalyse RCS par l'ammoniac. Cet ammoniac est obtenu indirectement par décomposition d'un précurseur injecté sous forme liquide, généralement de l'urée en solution aqueuse à 32,5% massique, plus connu sous la dénomination commerciale AdBlue^{®} (ou AUS32 ou DEF ou ARLA32). Ainsi, la solution d'urée est injectée dans la ligne d'échappement en amont du catalyseur RCS. L'eau contenue dans cette solution est rapidement vaporisée sous l'effet de la température des gaz d'échappement, puis chaque molécule d'urée se décompose suivant deux étapes en deux molécules d'ammoniac :

(NH₂)₂CO (urée) --> NH₃ (ammoniac) + HNCO (acide isocyanique) - (1)

HNCO + H₂O → NH₃ + CO₂ (2)

Alternativement de l'ammoniac peut être directement injecté à l'état gazeux dans la ligne d'échappement en amont du catalyseur RCS.

On connait des systèmes dans lesquels des additifs peuvent être injectés dans les gaz d'échappement afin d'améliorer la dépollution des gaz d'échappement.

Un exemple de mélange d'un additif pour la régénération du filtre à particules et d'un réducteur pour l'élimination des NOx injecté en amont du filtre FRCS est décrit dans la demande de brevet EP 2 541 012. L'additif en question, qui peut être un matériau contenant du cérium ou du fer, présente une capacité de stockage et de restitution de l'oxygène, ce qui permet de fournir de l'oxygène dans le FRCS et ainsi d'abaisser la température de régénération dans le filtre à particules, préservant alors de la dégradation le catalyseur de la réduction sélective des NOx dans le FRCS. Ce système bien que donnant satisfaction présente néanmoins des inconvénients non négligeables. En effet, l'utilisation de l'additif ne présente que peu d'avantage dans un milieu déjà riche en oxygène, comme cela est le cas pour une ligne d'échappement de moteur fonctionnant en mélange pauvre. En outre, il est décrit que la phase catalytique du catalyseur RCS est protégée uniquement lorsque celle-ci est enduite dans un filtre à particules. Cela exclut de fait les configurations pour lesquelles les fonctions de filtration des particules et de réduction catalytique des NOx par RCS sont réalisées sur des éléments dissociés. De plus, le système décrit ne concerne que des situations pour lesquelles la température des gaz d'échappement est élevée. Dès lors, la combustion des particules est susceptible d'augmenter encore la température au sein du filtre FRCS, ce qui peut entraîner une détérioration de la phase catalytique. US6051040 et US2011/239626 décrivent des additifs sous forme de compositions de métal du groupe du platine, seul ou en association avec un autre métal choisi parmi sodium, lithium, potassium, cérium, fer, cuivre, et manganèse.
Afin de remédier à certains de ces inconvénients, la demande de brevet WO 2016/091657 propose un fluide unique combinant des fonctions de réduction des oxydes d'azote et d'aide à la régénération des particules piégées dans le filtre à particules, qui peut être injecté dans la ligne des gaz d'échappement d'un moteur à combustion interne, en amont du système de traitement des gaz. Ce fluide unique peut être un mélange d'un agent réducteur contenant de l'ammoniac ou un composé générant de l'ammoniac par décomposition, tel que AdBlue^{®}, et d'un additif pour catalyser l'oxydation des particules. Les demandes de brevets déposées fin 2015 publiées sous les numéros FR3043568 FR3043569 et FR3043570 portent sur différentes mises en oeuvre d'un tel fluide pour la dépollution des gaz d'échappement, en particulier sur un fluide sous forme d'une suspension stable de particules colloïdales, un fluide sous forme d'une solution homogène, et un fluide sous forme d'une émulsion. On peut considérer la présente demande comme un perfectionnement des demandes de brevets WO 2016/091657 et FR3043569.

### Objectifs et résumé de l'invention

La présente invention vise en particulier à fournir un fluide unique combinant les fonctions d'aide à la régénération et de réduction des oxydes d'azote telles que décrites dans les demandes de brevet WO 2016/091657 et FR3043569, qui soit simple à mettre en oeuvre et qui permette une dépollution efficace des gaz d'échappement, en particulier qui puisse être préparé sans avoir recours à la réalisation pouvant être compliquée d'une suspension de particules ou d'une émulsion, ni à des agents spécifiques complexants, chélatants ou ligands pour mettre en solution le composé métallique.

Ainsi, pour atteindre au moins l'un des objectifs susvisés, parmi d'autres, la présente invention propose, selon un premier aspect, un fluide de dépollution de gaz d'échappement, notamment de moteur à combustion interne, ledit fluide étant constitué d'une solution aqueuse homogène d'au moins un agent réducteur ou précurseur d'un agent réducteur pour l'élimination d'oxydes d'azote NOx contenus dans les gaz d'échappement, ladite solution aqueuse comportant un additif métallique pour catalyser l'oxydation de particules des gaz d'échappement dans un filtre à particules, ledit additif métallique étant un carbonate métallique basique soluble dans ladite solution aqueuse.

Conformément à l'invention, l'agent réducteur ou précurseur de l'agent réducteur est de l'urée en solution dans de l'eau pure.

De préférence, l'agent réducteur ou précurseur de l'agent réducteur est de l'urée à 32,5 ± 0,7% massique en solution dans de l'eau pure et qui répond aux spécifications de la norme ISO 22241-1.

Avantageusement, la solution aqueuse homogène de l'agent réducteur est préparée à partir du produit commercial AdBlue^{®}.

Le carbonate métallique basique est choisi dans la liste constituée par le carbonate de cuivre basique de formule chimique Cu₃(CO₃)₂(OH)₂, le carbonate de cuivre basique de formule chimique Cu₂(CO₃)(OH)₂, le carbonate de nickel basique de formule chimique Ni₂(CO₃)(OH)₂, le carbonate de cuivre et nickel basique de formule chimique (Cu,Ni)₂(CO₃)(OH)₂, et plus préférentiellement dans la liste constituée par le carbonate de cuivre basique de formule chimique Cu₃(CO₃)₂(OH)₂ et le carbonate de cuivre basique de formule chimique Cu₂(CO₃)(OH)₂.

Ainsi, le carbonate métallique basique est de préférence le carbonate de cuivre basique de formule chimique Cu₂(CO₃)(OH)₂.

Avantageusement, le fluide de dépollution ne comporte pas d'agent additionnel pour complexer, ligander, chélater un ion métallique de l'additif métallique.

Selon un deuxième aspect, la présente invention porte sur un procédé de préparation du fluide de dépollution selon l'invention, selon lequel on additionne un carbonate métallique basique soluble dans une solution aqueuse d'au moins un composé réducteur ou précurseur d'un agent réducteur pour former une solution homogène.

Selon une mise en oeuvre, l'addition du carbonate métallique basique dans la solution aqueuse est réalisée sous agitation, et comporte de préférence une étape supplémentaire d'agitation après l'étape d'addition.

Selon un troisième aspect, la présente invention porte sur l'utilisation du fluide selon l'invention dans un moteur à combustion interne pour dépolluer des gaz d'échappement comportant des particules et des oxydes d'azote NOx, le fluide étant injecté dans les gaz d'échappement en amont de systèmes de traitement des gaz d'échappement comportant une filtration des particules et une réduction catalytique sélective des oxydes d'azote NOx., l'injection étant opérée en fonction des conditions de fonctionnement du moteur à combustion interne, de préférence de manière régulière.

De préférence, l'injection est opérée si la température préalablement déterminée des gaz d'échappement excède un seuil permettant démarrage du traitement des oxydes d'azote NOx.

La filtration des particules et la réduction catalytique sélective des oxydes d'azote NOx peuvent être réalisées dans un même dispositif étant un filtre catalysé FRCS.

Alternativement, la filtration des particules peut être réalisée dans un filtre à particules FAP en amont d'un dispositif de catalyse pour la réduction catalytique sélective des oxydes d'azote NOx, l'injection du fluide étant alors réalisée en amont du filtre à particules FAP.

La réduction catalytique sélective des oxydes d'azote NOx peut aussi être réalisée dans un dispositif de catalyse RCS en amont de la filtration des particules dans un filtre à particules FAP, l'injection du fluide étant alors réalisée en amont du dispositif de catalyse RCS.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est un schéma illustrant un exemple d'utilisation du fluide selon l'invention dans la ligne d'échappement d'un moteur à combustion interne de type Diesel.
La figure 2 est un graphique illustrant la perte de charge en fonction du temps dans un filtre SCRF d'une ligne d'échappement de gaz d'un moteur Diesel, lors d'une phase de chargement en suies de celui-ci, pour un fluide de dépollution selon l'art antérieur et selon l'invention.
La figure 3 est un graphique illustrant la perte de charge en fonction du temps dans un filtre SCRF d'une ligne d'échappement de gaz d'un moteur Diesel, lors d'une phase de régénération active, pour un fluide de dépollution selon l'art antérieur et selon l'invention.

### Description de l'invention

La présente invention propose un fluide pour la dépollution de gaz d'échappement, notamment d'un moteur à combustion interne, permettant d'effectuer à la fois la réduction catalytique sélective des oxydes d'azote NOx contenus dans les gaz d'échappement (fonction SCR), ainsi que l'aide à la régénération du filtre à particules (FAP) par oxydation catalytique des particules déposées dans le FAP (fonction dite d'aide à la régénération du FAP), cette aide à la régénération pouvant se manifester soit par la promotion de la régénération en continue du filtre à particules, soit par l'accélération de la combustion des suies lors des phases de régénération actives du FAP, soit par une combinaison de ces deux avantages.

Les particules contenues dans les gaz d'échappement sont majoritairement des particules de suies (composés carbonés). Elles peuvent aussi comprendre des composés inorganiques issus de l'usure des moteurs ou contenus dans les lubrifiants, dans les carburants et/ou dans leurs additifs. L'oxydation de particules dans le FAP dont il est fait référence dans la présente description est celle des particules de suie.

Les inventeurs ont mis en évidence qu'il était possible de fournir un fluide de dépollution combinant les deux fonctions principales de la dépollution, i.e. la réduction des NOx et l'oxydation catalytique des particules, qui soit stable dans le temps, et de préférence en température et en pH, et dont la préparation est simple.

La présente invention vise plus particulièrement un fluide, son mode de préparation, et son utilisation pour le traitement des polluants contenus dans les gaz d'échappement d'un moteur à combustion interne de type Diesel, notamment pour véhicule automobile, mais n'écarte en aucune manière son application pour les moteurs à allumage commandé, tels que ceux fonctionnant avec un carburant gazeux ou avec de l'essence, et en particulier en mélange pauvre.

Ainsi par moteur à combustion interne, il est entendu un moteur Diesel, mais cela n'écarte en aucune manière tous les autres moteurs à combustion interne, comme les moteurs fonctionnant à l'essence ou au gaz.

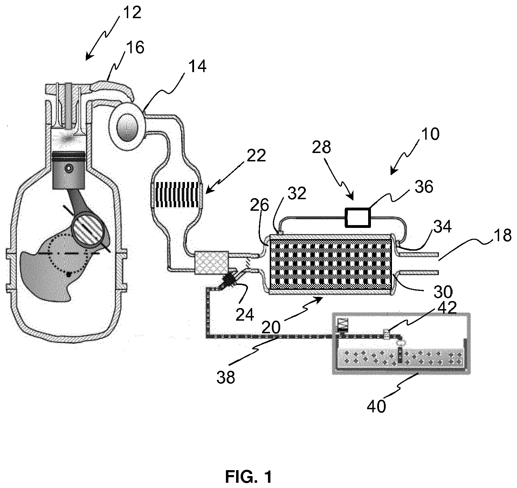

Le principe d'utilisation du fluide selon l'invention est détaillé plus loin dans la description, notamment en relation avec la figure 1.

Le principe du fluide selon l'invention est de réunir dans une même solution aqueuse un composé, l'urée, qui va agir comme un agent réducteur ou précurseur d'agent réducteur pour l'élimination des NOx contenus dans les gaz d'échappement, et un additif métallique qui, dans la ligne d'échappement, sous l'effet de la température et de l'oxygène résiduel des gaz d'échappement, va se transformer en un composé capable d'accroître la vitesse d'oxydation des particules de suie par un processus catalytique, et éventuellement d'abaisser la température d'oxydation des particules de suies, et ainsi aider à la régénération du FAP.

Ainsi, un des avantages du fluide selon l'invention réside dans le fait que la composition de ce fluide cumule les deux fonctions de dépollution moteur en un seul fluide.

Le fluide selon l'invention est constitué d'une solution aqueuse homogène d'au moins un agent réducteur ou précurseur d'un agent réducteur pour l'élimination d'oxydes d'azote NOx contenus dans les gaz d'échappement. La solution comporte un additif métallique pour catalyser l'oxydation de particules contenues dans les gaz d'échappement dans un filtre à particules. Cet additif métallique est un carbonate métallique basique soluble dans la solution aqueuse.

Selon l'invention, le fluide contenant l'additif métallique, qui permet de catalyser l'oxydation des particules dans le filtre à particules, est injecté directement à l'échappement, et ne passe pas par la chambre de combustion du moteur, comme cela peut être le cas dans certains systèmes connus, tel que celui décrit dans la demande de brevet EP 1 378 560.

Le carbonate métallique basique solubilisé dans la solution aqueuse de l'agent réducteur ou précurseur de l'agent réducteur pour l'élimination d'oxydes d'azote NOx contenus dans les gaz d'échappement appartient à la famille notée 05.BA selon la classification de Nickel-Strunz qui classe les minéraux selon leur composition chimique. Parmi les composés de cette famille, seuls ceux qui sont solubles dans la solution aqueuse d'un agent réducteur ou précurseur d'un agent réducteur pour l'élimination d'oxydes d'azote NOx contenus dans les gaz d'échappement peuvent être choisis en tant qu'additif métallique pour le fluide selon l'invention. Selon cette classification, la famille 05.BA porte sur les carbonates avec anions additionnels et sans H₂O additionnel, comportant au moins l'un des éléments suivants : Cu, Ni.

Le terme d'hydroxycarbonate métallique est parfois utilisé pour désigner un carbonate métallique basique.

Selon l'invention, le carbonate métallique basique mis en solution est choisi dans la liste constituée par :
- le carbonate de cuivre basique de formule chimique Cu₃(CO₃)₂(OH)₂, dénommé azurite et classé dans le groupe 05.BA.05 selon la classification de Nickel-Strunz ;
- le carbonate de cuivre basique de formule chimique Cu₂(CO₃)(OH)₂, dénommé malachite et classé dans le groupe 05.BA.10 selon la classification de Nickel-Strunz ;
- le carbonate de nickel basique de formule chimique Ni₂(CO₃)(OH)₂, dénommé nullaginite et classé dans le groupe 05.BA.10 selon la classification de Nickel-Strunz ; et
- le carbonate de cuivre et nickel basique de formule chimique (Cu,Ni)₂(CO₃)(OH)₂, dénommé glaukosphaérite et classé dans le groupe 05.BA.10 selon la classification de Nickel-Strunz.

De préférence, le carbonate métallique basique mis en solution est le carbonate de cuivre basique de formule chimique Cu₃(CO₃)₂(OH)₂ (azurite), le carbonate de cuivre basique de formule chimique Cu₂(CO₃)(OH)₂ (malachite), ou un mélange des deux, et est plus préférentiellement le carbonate de cuivre basique de formule chimique Cu₂(CO₃)(OH)₂ (malachite).

Les carbonates métalliques basiques cités, ajoutés à une solution aqueuse d'un agent réducteur ou précurseur d'un agent réducteur pour l'élimination d'oxydes d'azote NOx contenus dans les gaz d'échappement, apportent une concentration suffisante d'au moins un ion métallique, e.g. du nickel et/ou du cuivre, de préférence du cuivre, favorisant l'oxydation des particules de suie dans un FAP placé sur la ligne d'échappement.

Avantageusement, le fluide selon l'invention ne comporte pas d'agent additionnel complexant, chélatant ou ligand pour former un ion métallique complexé, ligandé ou chélaté dans la solution aqueuse de l'agent réducteur ou précurseur de l'agent réducteur. En effet, le(s) carbonate(s) métallique(s) basique(s) décrits sont directement solubles dans ladite solution aqueuse de l'agent réducteur ou précurseur de l'agent réducteur. Ainsi, un avantage de l'invention réside dans la simplicité de mise en oeuvre du fluide de dépollution. Selon l'invention, on évite de recourir à la fabrication d'émulsions pouvant être complexe et requérir l'utilisation de tensioactifs, ou de recourir à l'ajout d'agents spécifiques, complexants, chélatants ou ligands, pour mettre en solution les ions métalliques dans la solution aqueuse de l'agent réducteur ou précurseur de l'agent réducteur. En plus des coûts supplémentaires liés à l'usage de tels agents spécifiques additionnels complexants, chélatants ou ligands, ces derniers peuvent être un « poison » pour le catalyseur de l'oxydation des particules, par exemple comporter du soufre, du phosphore ou du sodium non souhaités pour le bon fonctionnement du catalyseur. L'invention présente également un avantage du fait de sa simplicité de mise en oeuvre comparativement à un fluide sous la forme d'une suspension colloïdale qui nécessite généralement d'être stabilisée afin de ne pas subir de phénomène de sédimentation. Dans la présente description, le terme de solution exclut toute phase solide dans la phase liquide, et toute forme du type suspension colloïdale ou émulsion (mélanges de phases liquides non miscibles). La solution selon l'invention est par conséquent monophasique. La solution obtenue est ainsi limpide.

En outre, la solution aqueuse homogène selon l'invention présente des caractéristiques de stabilité dans le temps, et dans une gamme de pH allant de 7 à 12, et ceci jusqu'à en particulier une température de 60°C.

Le fluide de dépollution selon l'invention reste préférentiellement stable dans une gamme de température allant de -11°C à + 60 °C.

Conformément à l'invention, l'agent réducteur ou précurseur de l'agent réducteur est de l'urée en solution dans de l'eau pure.

L'agent réducteur ou précurseur d'un agent réducteur est avantageusement de l'urée, mise à 32,5 ± 0,7% massique en solution dans de l'eau pure pour fournir une solution correspondant aux spécifications de la norme ISO 22241-1.

Par exemple, la solution aqueuse homogène de l'agent réducteur est préparée à partir du produit commercial AdBlue^{®}.

Le terme Adblue^{®} est utilisé dans la présente description pour désigner indifféremment les produits suivants : Adblue^{®}, DEF, AUS32, ARLA32 ou Diaxol.

Selon l'invention, le fluide est obtenu de la manière suivante : on additionne un carbonate métallique basique soluble dans une solution aqueuse d'au moins un agent réducteur ou précurseur d'un agent réducteur pour former une solution homogène. Le carbonate métallique basique soluble est un sel métallique tel que décrit plus haut. La solution obtenue est limpide.

Il existe différentes manières de réaliser le fluide selon l'invention selon le choix effectué pour la solution aqueuse de l'agent réducteur ou précurseur de l'agent réducteur, correspondant à plusieurs variantes.

La plus simple consiste à modifier une solution commerciale d'AdBlue^{®} par ajout du carbonate métallique basique soluble.

Un des avantages de l'invention est de ne pas modifier sensiblement les propriétés de densité, de viscosité et de conservation de la solution d'AdBlue^{®}, ce qui signifie en pratique qu'aucune modification du système d'injection de l'AdBlue^{®} dans le moteur n'est nécessaire afin de bénéficier des avantages de l'invention.

Il est également possible de réaliser une solution aqueuse d'urée suivant les spécifications ISO 22241-1, ou bien encore, d'utiliser un autre agent réducteur pour former une solution aqueuse, et d'additionner un carbonate métallique basique soluble à ladite solution pour former une solution aqueuse homogène.

Ainsi, selon une variante préférée de la présente invention, la solution aqueuse contenant le ou les agents réducteurs ou le ou les précurseurs d'un agent réducteur est préparée à partir d'un produit répondant aux spécifications de la norme ISO 22241, par exemple les produits commerciaux AdBlue^{®}, DEF, AUS32 ou ARLA32, de préférence à partir du produit commercial AdBlue^{®}.

Selon une autre variante préférée de la présente invention, la solution contenant le ou les agents réducteurs ou le ou les précurseurs d'un agent réducteur est préparée à partir d'un produit respectant les caractéristiques physiques et chimiques de la norme ISO 22241-1, par exemple le produit commercial Diaxol^{®}.

L'étape d'addition du carbonate métallique basique à la solution aqueuse de l'agent réducteur ou précurseur de l'agent réducteur peut être réalisée sous agitation, pour une meilleure homogénéisation de la solution.

Une étape d'agitation peut également être réalisée à l'issue de l'addition du carbonate métallique basique, pour accélérer la dissolution, par exemple pendant au moins 30 minutes.

La solution aqueuse homogène constituant le fluide selon l'invention est limpide.

La teneur en métal en solution sous forme ionique dans la composition finale du fluide peut être comprise entre 1 et 10000 ppm, de préférence entre 1 et 5000 ppm, et d'une manière encore préférée entre 10 et 2000 ppm. Une réduction de la teneur en métal est préférée car elle permet d'éviter l'accumulation de cendres métalliques dans le FAP.

Le fluide tel que décrit dans la présente invention est stable dans le temps dans une gamme de pH comprise entre 7 et 12. Selon l'invention, la stabilité du fluide selon l'invention inclut la non apparition de précipités d'hydroxydes métalliques insolubles dans cette gamme de pH.

Le fluide de dépollution selon l'invention présente une bonne stabilité vis à vis de la lumière. L'action de la lumière ne modifie pas la stabilité de la solution, et les conditions de cristallisation et de stabilité de l'urée ne sont pas affectées.

L'exposition prolongée à des températures allant jusqu'à + 60 °C n'altère pas non plus cette stabilité. Avantageusement, le fluide de dépollution selon l'invention reste préférentiellement stable dans une gamme de température allant de - 11°C à + 60 °C.

Le dégel de la solution après gel à coeur permet de retrouver les propriétés de la solution avant gel (pas de précipitation). Enfin, dans le cas où le fluide est préparé à partir d'une solution d'urée ou d'AdBlue^{®}, la quantité du ou des agents additionnés à la solution reste faible et permet de satisfaire à la concentration d'urée normalisée de 32,5 ± 0,7 %.

Selon l'invention, le fluide de dépollution tel que décrit est utilisé dans un moteur à combustion interne pour dépolluer des gaz d'échappement comportant des particules et des NOx, le fluide étant injecté dans les gaz d'échappement en amont de systèmes de traitement des gaz d'échappement comportant une filtration des particules (FAP) et une réduction catalytique sélective des NOx (SCR). L'injection est opérée en fonction des conditions de fonctionnement du moteur à combustion interne, de préférence de manière régulière.

La figure 1 illustre un exemple d'utilisation du fluide selon l'invention dans une installation de traitement en dépollution des gaz d'échappement d'un moteur à combustion interne de type Diesel 12, par exemple pour véhicule automobile. Une telle installation est connue, ainsi que le principe d'utilisation du fluide, et similaire à celle décrite dans la demande de brevet WO 2016/091657.

L'installation de dépollution comprend une ligne d'échappement 10 véhiculant les gaz d'échappement issus de la chambre de combustion du moteur vers l'atmosphère.

La ligne d'échappement 10 comprend un système de traitement des gaz d'échappement comportant un moyen de filtration des particules présentes dans les gaz d'échappement et un moyen de réduction catalytique sélective des oxydes d'azote NOx contenus également dans ces gaz.

En particulier, la ligne d'échappement 10 comprend, dans le sens de circulation des gaz d'échappement allant de son entrée 14 au voisinage du collecteur d'échappement 16 du moteur vers sa sortie 18 à l'air libre, au moins un dispositif de captation et d'élimination des particules ainsi qu'un dispositif de réduction des NOx.

Avantageusement, mais non obligatoirement, ces moyens sont combinés en un seul élément qui est plus connu sous le terme de filtre catalysé RCS 20 ou filtre FRCS.

De manière préférentielle, ce filtre FRCS 20 est placé en aval d'un catalyseur d'oxydation 22 qui a pour fonction de traiter les hydrocarbures imbrûlés et le monoxyde de carbone contenus dans les gaz d'échappement avant que ces derniers ne traversent le filtre FRCS. Ce catalyseur d'oxydation 22 a également pour fonction de convertir partiellement le monoxyde d'azote NO en dioxyde d'azote NO₂, le cas idéal étant d'avoir une répartition équimolaire entre le monoxyde d'azote et le dioxyde d'azote à l'entrée du filtre FRCS afin d'en maximiser son efficacité.

La ligne d'échappement comprend un moyen d'introduction, préférentiellement un injecteur 24, du fluide de dépollution selon l'invention pour la régénération du filtre à particules et pour l'élimination des NOx.

Cet injecteur est placé en amont du filtre FRCS. De préférence, l'injecteur est placé au voisinage de son entrée 26 de façon à ce que ce mélange puisse se combiner de façon la plus homogène possible avec les gaz d'échappement avant leur introduction dans le filtre FRCS.

Comme cela est généralement connu, la ligne comporte un moyen de détermination de pression différentielle 28 entre l'entrée 26 du filtre FRCS et sa sortie 30.

A titre d'exemple ce moyen comprend un capteur de pression amont 32 placé au niveau de l'entrée 26 du filtre FRCS et mesurant la pression des gaz d'échappement à cette entrée, un autre capteur 34, dit capteur aval, placé à la sortie 30 de ce filtre FRCS et mesurant la pression des gaz d'échappement à cette sortie, et un organe de calcul 36 pour déterminer la différence de pression entre l'entrée et la sortie du filtre FRCS. Ceci permet de connaitre le taux de colmatage par les particules du filtre FRCS.

De manière connue en soi, la ligne d'échappement porte un capteur de température (non représenté) placé sur la ligne d'échappement, et plus particulièrement à l'entrée du filtre FRCS, pour connaître à tout moment la température des gaz d'échappement qui circulent dans cette ligne. Alternativement, il peut être prévu d'utiliser des moyens logiques et/ou informatiques qui permettent d'estimer à tout moment la température des gaz d'échappement qui circulent dans la ligne.

Cette ligne peut également porter un capteur de NOx (non représenté) placé à la sortie du filtre FRCS 20 pour connaître à tout moment la quantité des NOx qui sort du filtre FRCS. De même, il peut être également prévu d'utiliser des moyens logiques et/ou informatiques qui permettent d'estimer à tout moment cette quantité de NOx.

Le fluide introduit dans la ligne d'échappement par l'injecteur 24 est amené par un conduit 38 raccordant cet injecteur à un réservoir 40 contenant ce fluide. Ce fluide est amené à circuler entre le réservoir et l'injecteur sous l'effet d'un moyen de pompage, comme une pompe doseuse 42.

L'injection du fluide selon l'invention est par exemple déclenchée par le calculateur moteur pour répondre à un besoin de disposer de la quantité nécessaire de fluide sur le catalyseur SCR afin d'opérer une réduction efficace des NOx.

L'injection du fluide est opérée en fonction des conditions de fonctionnement du moteur à combustion interne.

Les injections peuvent être réalisées de manière régulière, par exemple selon une période typiquement comprise entre quelques millisecondes et quelques dizaines de secondes dépendant des conditions de fonctionnement du moteur, ce qui permet de favoriser un mélange homogène du catalyseur avec les particules de suie et d'assurer un contact intime entre les particules et le catalyseur.

In fine le fait d'injecter le fluide selon l'invention permet soit de favoriser le phénomène de régénération en continu du filtre à particules et d'espacer ainsi les périodes de régénération actives du FAP, soit d'accélérer l'oxydation des particules lors des phases de régénération actives du FAP, permettant de limiter la consommation de carburant relative à cette phase et/ou de maximiser les chances de brûler une masse de particules de suie importante lorsque les conditions de températures et de composition gazeuse à l'échappement sont favorables à cette régénération active, soit une combinaison de ces deux avantages.

Pour le fonctionnement, le calculateur-moteur que comporte habituellement tout moteur connait à tout moment la température des gaz d'échappement et la quantité des NOx en sortie du filtre FRCS.

Ainsi, l'injection peut par exemple être opérée si la température préalablement déterminée des gaz d'échappement excède un seuil permettant le démarrage du traitement des oxydes d'azote NOx.

De manière avantageuse, la quantité du fluide injectée dans la ligne d'échappement est sensiblement proportionnelle à la formation de NOx et est déterminée par le calculateur-moteur.

L'injection du fluide en amont du filtre FRCS tout au long de la phase de chargement du filtre à particules permet un mélange intime entre l'additif catalytique de régénération et les particules à l'intérieur du filtre FRCS. La combinaison de l'activité catalytique de l'additif et le contact intime entre les particules et cet additif catalytique permet d'abaisser la température à laquelle démarre la combustion des particules afin de la rendre compatible avec les températures usuellement rencontrées à l'échappement des moteurs. Si besoin un apport de chaleur supplémentaire peut être fourni par l'ajout d'une post-injection au cours de laquelle les hydrocarbures s'oxydent sur le catalyseur d'oxydation 22, produisant un dégagement de chaleur au niveau de l'entrée 26 du filtre FRCS.

Selon une variante, au lieu d'un seul dispositif formé par le filtre catalysé FRCS, le système de traitement des gaz d'échappement comporte un dispositif de filtration des particules distinct du dispositif de réduction catalytique sélective des oxydes d'azote NOx. Selon cette configuration, un catalyseur du type catalyseur RCS est positionné en amont du FAP. Dans cette configuration, l'injecteur est placé en amont du catalyseur RCS.

Selon une autre variante, c'est à l'inverse le FAP qui est placé en amont du catalyseur du type RCS. Dans cette configuration, l'injecteur est placé en amont du FAP.

La ligne d'échappement comprend, aussi bien dans l'une ou l'autre de ces deux variantes, un injecteur du fluide selon l'invention comprenant un composé métallique pour la régénération des particules du filtre à particules et un agent réducteur pour l'élimination des NOx par le catalyseur RCS. Cet injecteur est placé en amont du moyen de traitement des gaz d'échappement (catalyseur RCS ou FAP) le plus proche du catalyseur d'oxydation 22.

Bien entendu et cela sans sortir du cadre de l'invention, la ligne d'échappement comprenant le filtre FRCS 20 ou la ligne d'échappement comprenant un catalyseur RCS et un FAP peut comporter des catalyseurs supplémentaires, par exemple un catalyseur SCR en plus du filtre FRCS, et/ou un catalyseur de clean-up, etc.

### Exemples

Les exemples ci-dessous illustrent, de manière non limitative, la préparation de fluides de dépollution selon l'invention (exemples 1 à 3), ainsi que certaines performances d'un exemple de fluide selon l'invention pour la dépollution des gaz d'échappement d'un moteur Diesel (exemple 4).

Les fluides peuvent être préparés à température ambiante ou à une température inférieure à 60°C, et supérieure à la température de cristallisation de l'urée (-11°C).

Les exemples 1 à 3 démontrent qu'il est possible d'obtenir une solution aqueuse homogène, stable dans le temps. Les exemples 1 à 3 décrits sont tous réalisés à partir d'AdBlue^{®} commercial et de carbonate basique de cuivre.

### Exemple 1 : solution contenant 350 ppm d'ions cuivre

Selon cet exemple, le fluide est réalisé comme suit : dans un flacon en verre de 250 cm³ contenant un barreau magnétique, on introduit 100 g d'AdBlue^{®}, et on additionne sous agitation 0,061 g d'un carbonate basique de cuivre de formule Cu₂(CO₃)(OH)₂ (malachite). Cette quantité de malachite correspond à une concentration finale dans la solution de 350 ppm de cuivre sous forme ionique. Après 15 minutes d'agitation à température ambiante, on évalue alors l'aspect de la solution immédiatement après sa préparation, ainsi qu'au bout d'une semaine après stockage à température ambiante.

On constate que la solution est homogène et le reste au bout d'une semaine. Aucune précipitation n'est observée.

### Exemple 2 : solution contenant 500 ppm d'ions cuivre

Selon cet exemple 2, le fluide est réalisé comme suit : dans une fiole Erlenmeyer de 2 litres contenant un barreau magnétique, on introduit 1000 g d'AdBlue^{®}, et on additionne sous agitation 0,87 g d'un carbonate basique de cuivre de formule Cu₂(CO₃)(OH)₂ (malachite). Cette quantité de malachite correspond à une concentration finale dans la solution de 500 ppm de cuivre sous forme ionique. Après deux heures d'agitation à température ambiante, on évalue alors l'aspect de la solution immédiatement après sa préparation, ainsi qu'au bout d'une semaine après stockage à température ambiante.

On constate que la solution est homogène et le reste au bout d'une semaine. Aucune précipitation n'est observée.

### Exemple 3 : solution contenant 80 ppm d'ions cuivre

L'exemple a décrit un mode de préparation similaire à celui de l'exemple 1, excepté que la quantité de carbonate basique de cuivre Cu₂(CO₃)(OH)₂ additionnée à la solution d'AdBlue^{®} est de 0,0139 g. Cette quantité de malachite correspond à une concentration finale dans la solution de 80 ppm de cuivre sous forme ionique.

On évalue alors l'aspect de la solution immédiatement après sa préparation, ainsi qu'au bout d'une semaine après stockage à température ambiante. On constate ainsi que la solution est homogène et le reste au bout d'une semaine. Aucune précipitation n'est observée.

### Exemple 4

Cet exemple s'applique à la dépollution des gaz d'échappement d'un moteur thermique, et plus précisément d'un moteur Diesel. Le moteur Diesel est équipé d'une ligne d'échappement contenant un catalyseur d'oxydation, suivi par un mélangeur et un catalyseur dit FRCS pour filtre à réduction catalytique sélective. Cette configuration est similaire à celle illustrée à la figure 1 montrant un catalyseur d'oxydation 22, suivi par le mélangeur (non référencé) et le filtre FRCS 20.

Un fluide préparé selon l'exemple 3 est injecté en amont du mélangeur et du catalyseur FRCS à l'aide de l'injecteur 24, afin de réaliser d'une part une réaction de réduction sélective des NOx par l'ammoniac issu de la décomposition de la solution aqueuse d'urée (AdBlue^{®}), et d'autre part d'apporter une aide à la régénération des particules de suie stockées dans le filtre FRCS. Ce procédé de dépollution utilisant un produit unique visant à la fois à la réduction des NOx et à l'aide à la régénération des suies stockées dans un FAP classique ou un filtre catalysé FRCS est décrit en détails plus haut, ainsi que dans la demande de brevet WO 2016/091657.

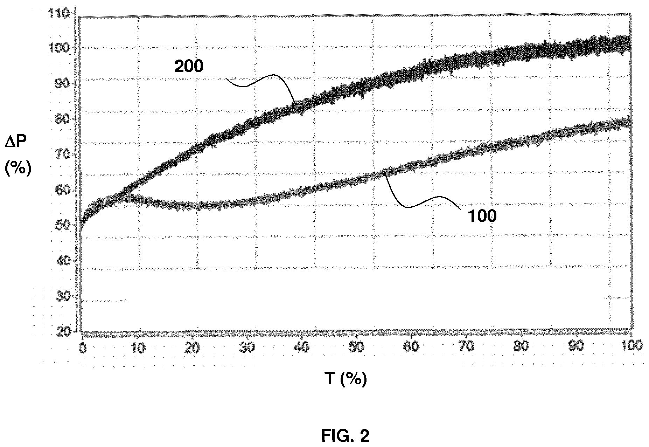

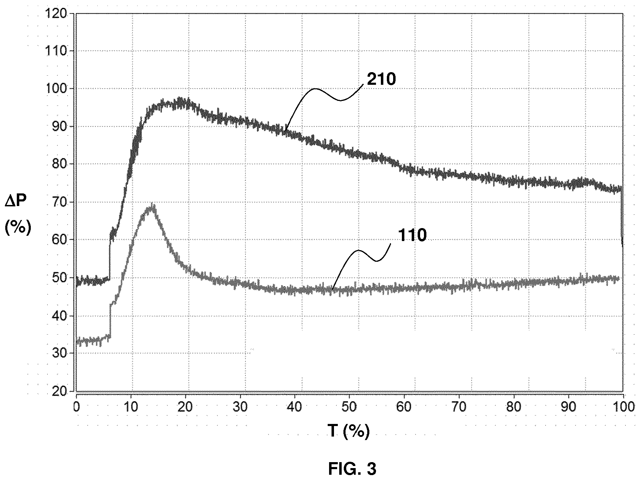

Les figures 2 et 3 illustrent l'efficacité du fluide de l'exemple 3, par comparaison avec de l'AdBlue^{®} commercial seul (non additionné d'un carbonate métallique basique soluble).

La figure 2 présente l'évolution de la perte de charge générée par le filtre SCRF au cours du temps lorsque celui-ci est parcouru par des gaz d'échappement contenant des particules de suie (temps de chargement en abscisse, en %, et perte de charge adimensionnée en ordonnée, en %). Il est aisément observable que dans des conditions moteur et échappement strictement identiques (température des gaz d'échappement, quantités de gaz et de particules), l'augmentation de la perte de charge est réduite dans le cas de l'utilisation du fluide de dépollution selon l'exemple 3 (courbe 100) en comparaison de l'utilisation de l'AdBlue^{®} seul (courbe 200). La perte de charge étant reliée à la quantité de particules de suie piégées dans le filtre, on peut conclure à une quantité de particules de suie plus faible au sein du FRCS pour le cas où un fluide selon l'exemple 3 est utilisé, ledit fluide ayant permis une oxydation partielle des particules de suie, appelée régénération continue par l'homme de l'art (régénération continue lors de la phase de phase de chargement du FAP ou du FRCS). La réduction de la perte de charge s'accompagne d'une réduction de la masse de suies obtenues à la fin de la phase de chargement, de l'ordre de 30%.

Pour parfaire la régénération du FAP ou du FRCS, il est nécessaire de procéder périodiquement à une oxydation plus complète des particules de suie stockées, couramment appelée régénération active. La figure 3 décrit l'évolution de la perte de charge en fonction du temps au cours de cette phase de régénération active pour une température des gaz d'échappement de 600°C (temps de régénération active en abscisse, en %, et perte de charge adimensionnée en ordonnée, en %). Il est observable sur la figure 3 que la chute de la perte de charge après un maximum est bien plus rapide en utilisant le fluide selon l'exemple 3 (courbe 110), en comparaison avec la solution l'AdBlue^{®} de référence (courbe 210). Au cours de cette régénération active, l'utilisation du fluide selon l'exemple 3 permet une augmentation de la vitesse de combustion des particules de suie par le phénomène de catalyse décrit plus haut, ce qui constitue une aide à la régénération du FAP ou du FRCS.

En complément de l'évolution de la perte de charge, la masse des particules de suie résiduelle à l'issue d'une régénération active d'une durée de 30 minutes a également été mesurée. Alors que la suie non brûlée représentait 68% de la masse des particules de suie chargée dans le cas de référence utilisant une solution l'AdBlue^{®} pur (courbe 210), celle-ci n'est plus que de 22% dans le cas de l'utilisation du fluide selon l'exemple 3.

## Revendications

1. Fluide pour la dépollution de gaz d'échappement, notamment de moteur à combustion interne, ledit fluide étant constitué d'une solution aqueuse homogène d'au moins un agent réducteur ou précurseur d'un agent réducteur pour l'élimination d'oxydes d'azote NOx contenus dans les gaz d'échappement, ladite solution aqueuse comportant un additif métallique pour catalyser l'oxydation de particules des gaz d'échappement dans un filtre à particules, ledit additif métallique étant un carbonate métallique basique soluble dans ladite solution aqueuse, ledit au moins un agent réducteur ou précurseur d'un agent réducteur est de l'urée en solution dans de l'eau pure et ledit carbonate métallique basique est choisi dans la liste constituée par le carbonate de cuivre basique de formule chimique Cu₃(CO₃)₂(OH)₂, le carbonate de cuivre basique de formule chimique Cu₂(CO₃)(OH)₂, le carbonate de nickel basique de formule chimique Ni₂(CO₃)(OH)₂, le carbonate de cuivre et nickel basique de formule chimique (Cu,Ni)₂(CO₃)(OH)₂, et de préférence dans la liste constituée par le carbonate de cuivre basique de formule chimique Cu₃(CO₃)₂(OH)₂ et le carbonate de cuivre basique de formule chimique Cu₂(CO₃)(OH)₂.

2. Fluide selon la revendication 1, dans lequel ledit au moins un agent réducteur ou précurseur d'un agent réducteur est de l'urée à 32,5 ± 0,7% massique en solution dans de l'eau pure et qui répond aux spécifications de la norme ISO 22241-1.

3. Fluide selon la revendication 2, dans lequel la solution aqueuse homogène de l'agent réducteur est préparée à partir du produit commercial AdBlue^{®}.

4. Fluide selon la revendication 3, dans lequel le carbonate métallique basique est le carbonate de cuivre basique de formule chimique Cu₂(CO₃)(OH)₂.

5. Fluide selon l'une des revendications précédentes, ne comportant pas d'agent additionnel pour complexer, ligander, chélater un ion métallique de l'additif métallique.

6. Procédé de préparation du fluide de dépollution des gaz d'échappement selon l'une des revendications 1 à 5, selon lequel on additionne un carbonate métallique basique soluble dans une solution aqueuse d'au moins un composé réducteur ou précurseur d'un agent réducteur pour former une solution homogène.

7. Procédé de préparation selon la revendication 6, dans lequel l'addition dudit carbonate métallique basique dans la solution aqueuse est réalisée sous agitation, et comportant de préférence une étape supplémentaire d'agitation après l'étape d'addition.

8. Utilisation du fluide selon l'une des revendications 1 à 7 dans un moteur à combustion interne pour dépolluer des gaz d'échappement comportant des particules et des oxydes d'azote NOx, ledit fluide étant injecté dans les gaz d'échappement en amont de systèmes de traitement des gaz d'échappement comportant une filtration des particules et une réduction catalytique sélective des oxydes d'azote NOx., l'injection étant opérée en fonction des conditions de fonctionnement du moteur à combustion interne, de préférence de manière régulière.

9. Utilisation du fluide selon la revendication 8, dans laquelle l'injection est opérée si la température préalablement déterminée des gaz d'échappement excède un seuil permettant démarrage du traitement des oxydes d'azote NOx.

10. Utilisation du fluide selon l'une des revendications 8 et 9, dans laquelle la filtration des particules et la réduction catalytique sélective des oxydes d'azote NOx sont réalisées dans un même dispositif étant un filtre catalysé FRCS.

11. Utilisation du fluide selon l'une des revendications 8 et 9, dans laquelle la filtration des particules est réalisée dans un filtre à particules FAP en amont d'un dispositif de catalyse pour la réduction catalytique sélective des oxydes d'azote NOx, l'injection dudit fluide étant réalisée en amont du filtre à particules FAP.

12. Utilisation du fluide selon l'une des revendications 8 et 9, dans laquelle la réduction catalytique sélective des oxydes d'azote NOx est réalisée dans un dispositif de catalyse RCS en amont de la filtration des particules dans un filtre à particules FAP, l'injection dudit fluide étant réalisée en amont du dispositif de catalyse RCS.

## Patentansprüche

1. Fluid zur Reinigung von Abgasen, insbesondere eines Verbrennungsmotors, wobei das Fluid aus einer homogenen wässrigen Lösung von mindestens einem Reduktionsmittel oder Reduktionsmittelvorläufer besteht, zur Entfernung von in den Abgasen enthaltenen Stickstoffoxiden NOx, wobei die wässrige Lösung ein Metalladditiv zur Katalyse der Oxidation von Abgaspartikeln in einem Partikelfilter umfasst, wobei es sich bei dem Metalladditiv um ein in der wässrigen Lösung lösliches basisches Metallcarbonat handelt, es sich bei dem mindestens einen Reduktionsmittel oder Reduktionsmittelvorläufer um eine Lösung von Harnstoff in reinem Wasser handelt und das basische Metallcarbonat aus der Liste bestehend aus basischem Kupfercarbonat der chemischen Formel Cu₃(CO₃)₂(OH)₂, basischem Kupfercarbonat der chemischen Formel Cu₂(CO₃)(OH)₂, basischem Nickelcarbonat der chemischen Formel Ni₂(CO₃)(OH)₂, basischem Kupfernickelcarbonat der chemischen Formel (Cu,Ni)₂(CO₃)(OH)₂ und vorzugsweise aus der Liste bestehend aus basischem Kupfercarbonat der chemischen Formel Cu₃(CO₃)₂(OH)₂ und basischem Kupfercarbonat der chemischen Formel Cu₂(CO₃)(OH)₂ ausgewählt ist.

2. Fluid nach Anspruch 1, wobei es sich bei dem mindestens einen Reduktionsmittel oder Reduktionsmittelvorläufer um Harnstoff in einer 32,5 ± 0,7 gew.-%igen Lösung in reinem Wasser handelt, die die Spezifikationen der ISO-Norm 22241-1 erfüllt.

3. Fluid nach Anspruch 2, wobei die homogene wässrige Lösung des Reduktionsmittels aus dem Handelsprodukt AdBlue^{®} hergestellt wird.

4. Fluid nach Anspruch 3, wobei es sich bei dem basischen Metallcarbonat um das basische Kupfercarbonat der chemischen Formel Cu₂(CO₃)(OH)₂ handelt.

5. Fluid nach einem der vorhergehenden Ansprüche, das kein zusätzliches Mittel zum Komplexieren, Binden oder Chelatisieren eines Metallions des Metalladditivs enthält.

6. Verfahren zur Herstellung des Fluids zur Reinigung von Abgasen nach einem der Ansprüche 1 bis 5, gemäß dem man ein lösliches basisches Metallcarbonat zu einer wässrigen Lösung mindestens einer reduzierenden Verbindung oder eines Reduktionsmittelvorläufers gibt, was eine homogene Lösung ergibt.

7. Herstellungsverfahren nach Anspruch 6, wobei die Zugabe des basischen Metallcarbonats zu der wässrigen Lösung unter Rühren durchgeführt wird und vorzugsweise einen zusätzlichen Schritt des Rührens nach dem Zugabeschritt umfasst.

8. Verwendung des Fluids nach einem der Ansprüche 1 bis 7 in einem Verbrennungsmotor zur Reinigung von Abgasen, die Partikel und Stickstoffoxide NOx umfassen, wobei das Fluid stromaufwärts von Abgasbehandlungssystemen, die eine Partikelfiltration und eine selektive katalytische Reduktion von Stickstoffoxiden NOx umfassen, in die Abgase eingespritzt wird, wobei die Einspritzung in Abhängigkeit von den Betriebsbedingungen des Verbrennungsmotors durchgeführt wird, vorzugsweise regelmäßig.

9. Verwendung des Fluids nach Anspruch 8, wobei die Einspritzung durchgeführt wird, wenn die vorbestimmte Temperatur der Abgase einen Schwellenwert überschreitet, der den Beginn der Behandlung der Stickstoffoxide NOx erlaubt.

10. Verwendung des Fluids nach einem der Ansprüche 8 und 9, wobei die Partikelfiltration und die selektive katalytische Reduktion von Stickstoffoxiden NOx in derselben Vorrichtung durchgeführt wird, bei der es sich um einen katalysierten SCRF-Filter handelt.

11. Verwendung des Fluids nach einem der Ansprüche 8 und 9, wobei die Partikelfiltration in einem Partikelfilter PF stromaufwärts einer Katalysevorrichtung für die selektive katalytische Reduktion von Stickstoffoxiden NOx durchgeführt wird, wobei die Einspritzung des Fluids stromaufwärts des Partikelfilters PF erfolgt.

12. Verwendung des Fluids nach einem der Ansprüche 8 und 9, wobei die selektive katalytische Reduktion von Stickstoffoxiden NOx in einer SCR-Katalysevorrichtung stromaufwärts der Partikelfiltration in einem Partikelfilter PF durchgeführt wird, wobei die Einspritzung des Fluids stromaufwärts der SCR-Katalysevorrichtung erfolgt.

## Claims

1. Fluid for the cleaning of exhaust gases, especially from an internal combustion engine, said fluid being composed of a homogeneous aqueous solution of at least one reducing agent or reducing agent precursor for the elimination of nitrogen oxides NOₓ present in the exhaust gases, said aqueous solution comprising a metallic additive for catalysis of the oxidation of exhaust gas particles in a particle filter, said metallic additive being a basic metallic carbonate soluble in said aqueous solution, said at least one reducing agent or reducing agent precursor being a solution of urea in pure water and said basic metallic carbonate being selected from the list consisting of basic copper carbonate of chemical formula Cu₃(CO₃)₂(OH)₂, basic copper carbonate of chemical formula Cu₂(CO₃)(OH)₂, basic nickel carbonate of chemical formula Ni₂(CO₃)(OH)₂, basic nickel copper carbonate of chemical formula (Cu,Ni)₂(CO₃)(OH)₂, and preferably from the list consisting of basic copper carbonate of chemical formula Cu₃(CO₃)₂(OH)₂ and basic copper carbonate of chemical formula Cu₂(CO₃)(OH)₂.

2. Fluid according to Claim 1, wherein said at least one reducing agent or reducing agent precursor is urea in a 32.5 ± 0.7% by weight solution in pure water and that meets the specifications of standard ISO 22241-1.

3. Fluid according to Claim 2, wherein the homogeneous aqueous solution of the reducing agent is prepared starting from the commercial product AdBlue^{®}.

4. Fluid according to Claim 3, wherein the basic metallic carbonate is basic copper carbonate of chemical formula Cu₂(CO₃)(OH)₂.

5. Fluid according to any of the preceding claims, in which there is no additional agent for complexing, binding or chelating a metallic ion of the metallic additive.

6. Method of preparation of the exhaust-gas cleaning fluid according to any of Claims 1 to 5, wherein a soluble basic metallic carbonate is added to an aqueous solution of at least one reducing compound or reducing agent precursor to form a homogeneous solution.

7. Method of preparation according to Claim 6, wherein the addition of said basic metallic carbonate to the aqueous solution is carried out with agitation, and preferably including a supplementary step of agitating after the addition step.

8. Use of the fluid according to any of Claims 1 to 7 in an internal combustion engine for cleaning exhaust gases that comprise particles and nitrogen oxides NOₓ, said fluid being injected into the exhaust gases upstream of exhaust gas treatment systems comprising a particle filtration and a selective catalytic reduction of the nitrogen oxides NOₓ, the injection being performed in accordance with the operating conditions of the internal combustion engine, preferably in a regular manner.

9. Use of the fluid according to Claim 8, wherein the injection is performed if the predetermined temperature of the exhaust gases is above a threshold that enables initiation of the treatment of the nitrogen oxides NOₓ.

10. Use of the fluid according to either of Claims 8 and 9, wherein the particle filtration and the selective catalytic reduction of the nitrogen oxides NOₓ are carried out in the same device, this being an SCRF catalytic filter.

11. Use of the fluid according to either of Claims 8 and 9, wherein the particle filtration is carried out in a particle filter PF upstream of a catalysis device for the selective catalytic reduction of the nitrogen oxides NOₓ, said fluid being injected upstream of the particle filter PF.

12. Use of the fluid according to either of Claims 8 and 9, wherein the selective catalytic reduction of the nitrogen oxides NOₓ is carried out in an RCS catalysis device upstream of the particle filtration in a particle filter PF, said fluid being injected upstream of the RCS catalysis device.
